# EUROPEAN PATENT SPECIFICATION

(11) **EP 3 282 749 B1**
(45) Date of publication and mention of the grant of the patent: **11.12.2019**
(21) Application number: 17182888.2
(22) Date of filing: 25.07.2017
(51) Int. Cl.: H04W 28/06, H04L 5/00, H04L 12/841, H04W 72/04

(54) **APPARATUS AND METHOD OF SIGNALLING SUPPORT FOR REDUCED LATENCY OPERATION AND COMPUTER PROGRAM THEREFOR**
VORRICHTUNG UND VERFAHREN ZUR SIGNALISIERUNGSUNTERSTÜTZUNG FÜR EINEN BETRIEB MIT REDUZIERTER LATENZZEIT, UND COMPUTERPROGRAMM DAFÜR
APPAREIL ET PROCÉDÉ DE SIGNALISATION DE SUPPORT POUR UN FONCTIONNEMENT À LATENCE RÉDUITE, ET PROGRAMME INFORMATIQUE CORRESPONDANT

(30) Priority: 11.08.2016 US 201662373616 P
(43) Date of publication of application: 14.02.2018
(73) Proprietor: Nokia Technologies Oy, 02610 Espoo (FI)
(72) Inventor: LUNTTILA, Timo, 02200 Espoo (FI); HUGL, Klaus, 1070 Wien (AT); SCHOBER, Karol, 00440 Helsinki (FI)
(74) Representative: Style, Kelda Camilla Karen

(56) References cited:
- WO-A1-2015/019043
- US-A1- 2009 238 098
- US-A1- 2016 073 344

## Description

### BACKGROUND:

### Field:

Embodiments generally relate to wireless or mobile communications networks, such as, but not limited to, the Universal Mobile Telecommunications System (UMTS) Terrestrial Radio Access Network (UTRAN), Long Term Evolution (LTE) Evolved UTRAN (E-UTRAN), LTE-Advanced (LTE-A), LTE-A Pro, and/or 5G radio access technology. Some embodiments may generally relate to latency reduction in such networks.

### Description of the Related Art:

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN), no RNC exists and radio access functionality is provided by an evolved Node B (eNodeB or eNB) or many eNBs. Multiple eNBs are involved for a single UE connection, for example, in case of Coordinated Multipoint Transmission (CoMP) and in dual connectivity.

Long Term Evolution (LTE) or E-UTRAN refers to improvements of the UMTS through improved efficiency and services, lower costs, and use of new spectrum opportunities. In particular, LTE is a 3GPP standard that provides for uplink peak rates of at least, for example, 75 megabits per second (Mbps) per carrier and downlink peak rates of at least, for example, 300 Mbps per carrier. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for high-speed data and media transport in addition to high-capacity voice support. Advantages of LTE include, for example, high throughput, low latency, FDD and TDD support in the same platform, an improved end-user experience, and a simple architecture resulting in low operating costs.

Certain releases of 3GPP LTE (e.g., LTE Rel-10, LTE Rel-11, LTE Rel-12, LTE Rel-13) are targeted towards international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A is a more optimized radio system fulfilling the international telecommunication union-radio (ITU-R) requirements for IMT-Advanced while maintaining backward compatibility. One of the key features of LTE-A, introduced in LTE Rel-10, is carrier aggregation, which allows for increasing the data rates through aggregation of two or more LTE carriers.

5^{th} generation wireless systems (5G) refers to the new generation of radio systems and network architecture. 5G is expected to provide higher bitrates and coverage than the current LTE systems. Some estimate that 5G will provide bitrates one hundred times higher than LTE offers. 5G is also expected to increase network expandability up to hundreds of thousands of connections. The signal technology of 5G is anticipated to be improved for greater coverage as well as spectral and signaling efficiency.

US2016/073344A1 relates to techniques for transmitting at least one of a Clear to Send (CTS) message or a Request to Send (RTS) message on an LTE-U Secondary Cell (SCell) carrier.

WO 2015/019043 A1 discloses a delay based resources scheduling/allocation by a eNB, wherein the data packets are classified at the UE side into delay tolerant and non-delay tolerant data packets, and wherein the data packets are transmitted by the UE according to the amount of packets in the buffer state (e.g., number of delay tolerant packets) and the channel state.

US 2009/238098 A1 discloses a DRX reconfiguration at the UE side, wherein the DRX change settings are provided on request by the eNB to the UE.

### SUMMARY

The present invention defines a base station according to claim 1, a corresponding method according to claim 5, a user equipment according to claim 8, a corresponding method according to claim 13 and a computer program according to claim 14. Further embodiments are set forth in the dependent claims 2-4, 6, 7 and 9-12.

### BRIEF DESCRIPTION OF THE DRAWINGS:

For proper understanding of the invention, reference should be made to the accompanying drawings, wherein:
Fig. 1 illustrates an example block diagram of an approach for processing time switching for HARQ-ACK transmission corresponding to DL data (PDSCH) transmission, according to one embodiment;
Fig. 2 illustrates an example block diagram of an approach for processing time switching for PUSCH data transmission, according to one embodiment;
Fig. 3 illustrates an example signaling diagram, according to one embodiment;
Fig. 4a illustrates an example block diagram of an apparatus, according to one embodiment;
Fig. 4b illustrates an example block diagram of an apparatus, according to another embodiment;
Fig. 5a illustrates an example flow diagram of a method, according to an embodiment; and
Fig. 5b illustrates an example flow diagram of a method, according to another embodiment.

### DETAILED DESCRIPTION:

It will be readily understood that the components, as generally described and illustrated in the figures herein, may be arranged and designed in a wide variety of different configurations. Thus, the following detailed description of embodiments of systems, methods, apparatuses, and computer program products of signalling support for reduced latency operation, as represented in the attached figures, is not intended to limit the scope of the invention. The below mentioned embodiments are meant to be examples useful for understanding the invention, wherein the present invention is only defined by the appended claims.

The features, structures, or characteristics described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments.

Additionally, if desired, the different functions discussed below may be performed in a different order and/or concurrently with each other. Furthermore, if desired, one or more of the described functions may be optional or may be combined. As such, the following description should be considered as merely illustrative for understanding the invention, and not in limitation thereof.

Some embodiments may relate to the LTE-Advanced Pro system, which will be part of 3GPP LTE Rel-13/14. More specifically, certain embodiments are directed to latency reduction. A Rel-13 Study Item entitled, "Study on Latency reduction techniques" carried out in 3GPP has indicated that processing time reduction is necessary in order to improve the physical layer radio latency. Follow-up work items have objectives that include the introduction of shorter transmission time interval (TTI) operation with reduced processing, as well as also enabling reduced processing time for legacy 1 millisecond (ms) TTI channel designs.

Specifically, the work item objectives include, for Frame structure types 1, 2 and 3 for legacy 1 ms TTI operation, specifying support for a reduced minimum timing compared to legacy operation between UL grant and UL data and between DL data and DL HARQ feedback for legacy 1ms TTI operation, reusing the 3GPP Rel-14 physical downlink shared channel (PDSCH)/(E)physical downlink control channel (PDCCH)/physical uplink shared channel (PUSCH)/physical uplink control channel (PUCCH) channel design. This may apply at least for the case of restricted maximum supported transport block sizes for PDSCH and/or PUSCH when the reduced minimum timing is in operation, and if agreed by RANI for the case of unrestricted maximum supported transport block sizes. Another objective includes specifying support for a reduced maximum timing advance (TA) to enable processing time reductions. It is noted that the size of the reduction in minimum timing may be different between UL and DL cases. Any impact on channel state information (CSI) feedback and processing time may be studied and, if needed, necessary modifications may be specified. Also to be studied and specified, if agreed by RANI, is asynchronous hybrid automatic repeat request (HARQ) for PUSCH with reduced processing time.

The allowed processing times for LTE FDD (LTE FS1) have been defined in 3GPP Rel-8 to have a N+4 relationship between the PDSCH and the related HARQ-Ack feedback, as well as between an UL grant sent to the UE and the related PUSCH transmission by the UE. This means that for the PDSCH transmitted in subframe/TTI N, the UE is required to feedback the related HARQ-Ack feedback in subframe/TTI N+4 (in the case of FDD/Frame Structure 1), or in subframe N+4 or later (in the case of TDD / FS2). Similarly, an UL grant sent in the subframe/TTI N requests the UE to send the related PUSCH in the subframe/TTI N+4.

With reduced processing time for the 1ms TTI length, the aim is to decrease the processing time in a way to enable the UE: 1) to send the HARQ-Ack feedback earlier, and 2) to transmit PUSCH earlier. Instead of the LTE Rel-8 timing relation of N+4, a reduction to, for example, N+3 or even N+2 is currently envisioned.

Certain embodiments are directed to the signalling mechanisms that facilitate switching between different processing times (i.e., HARQ-ACK feedback delays and or UL scheduling delays), taking into account that UEs may not be able to process transport block of all sizes faster than using N+4 timing. It should be noted that since the 3GPP Work Item deals with Frame Structure 3 as well, some embodiments are also applicable to LTE Licensed Assisted Access (LAA), as well as MulteFire.

As discussed in the foregoing, reduction of the maximum supported transport block size may need to be considered along with shortened processing times. This may be necessary to ensure that a UE can indeed process the data one or two milliseconds faster, as required. On the other hand, it should be possible to switch back to legacy N+4 ms timing and vice versa, allowing for utilization of all transport block sizes when necessary, for example when the TCP window grows over certain threshold or is reset. In other words, the network should have the means for dynamic (on a per subframe time scale) switching between the legacy N+4 timing, and the reduced processing times with N+2 or N+3 ms timing. Embodiments provide solutions for performing such switching, while minimizing the changes to the LTE air interface (e.g., PDCCH DCI formats).

One embodiment includes determining the timing for HARQ-ACK feedback transmission corresponding to PDSCH transport block, and/or timing between UL grant reception and PUSCH transmission such that the complexity of UE processing associated with the DL or UL data processing is taken into account. For example, an embodiment is configured to determine the HARQ-ACK feedback timing and/or UL grant timing based on a Latency Reduction Threshold (LRT), where the LRT is defined as discussed in the following.

In an embodiment, the LRT is defined in terms of a Transport Block Size (in the case of single multiple input multiple output (MIMO) layer transmission) and/or sum of Transport Block Sizes (with MIMO spatial multiplexing, taking the number of transmitted channel coded codewords into account). An LRT may be set such that, for Transport Block Sizes (TBSs) below the LRT a faster timing is applied, and, for TBSs larger than the LRT, legacy N+4 timing is used. In certain embodiments, the LRT may be predetermined, such as being fixed in the (3GPP) specifications, or may be configurable by the eNB. For example, the maximum value for LRT may be fixed in the specifications or depend on UEs capability, but the eNB may choose a lower value for the threshold amongst a predefined set of values and indicate the threshold for the UE via RRC signalling.

In some embodiments, the Latency Reduction Threshold may also depend on the subframe type (e.g., normal vs. DwPTS), system bandwidth (BW), DL Transmission mode / scheme (e.g., CRS vs. DMRS based demodulation), and/or the downlink physical control channel used (e.g., PDCCH vs. EPDCCH based DL control). When the Latency Reduction Threshold depends on the subframe type, in DwPTS subframes the threshold may be scaled according to the number of available OFDM symbols. When the Latency Reduction Threshold depends on the DL Transmission mode / scheme, for DMRS based DL demodulation, since the time required for channel estimation is larger than with CRS based operation, N+4 timing may always be followed, or the LRT may be defined separately from that of CRS based demodulation (e.g., smaller LRT for DM-RS based PDSCH demodulation compared to CRS based demodulation in order to balance the longer time needed for channel estimation). When the Latency Reduction Threshold depends on the downlink physical control channel used, a DL or UL grant can be either sent through 3GPP Rel. 8 PDCCH - or EPDCCH introduced in 3GPP Rel. 11. The UE is able to start DL control (DCI) decoding with PDCCH immediately after end the PDCCH at latest in the 5 OFDM symbol of a DL subframe whereas in case of EPDCCH the information is spread in time over the full DL subframe and the DCI blind decoding with EPDCCH can start later. Therefore, it would be possible to define a smaller LRT for EPDCCH based DL control, whereas a larger LRT for PDCCH based DL control could be applied. This way, the additional about half a subframe latency of EPDCCH compared to PDCCH based DL control can be balanced. Alternatively, the different timing may be applied with PDCCH and EPDCCH. For example, with PDCCH the timing could be N+2 whereas with EPDCCH N+3 timing might suffice.

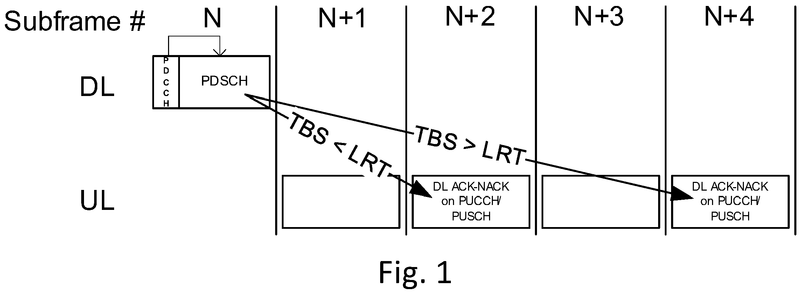

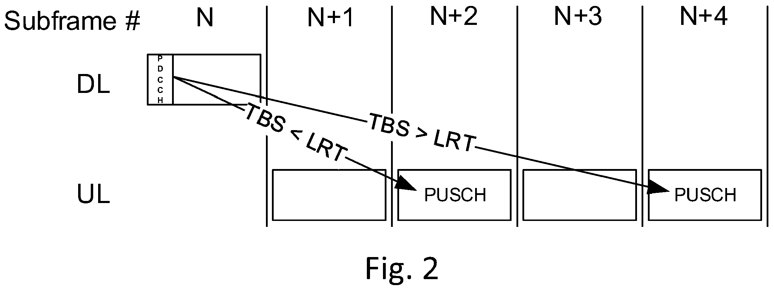

Fig. 1 illustrates an example block diagram of an approach for processing time switching for HARQ-ACK transmission corresponding to DL data (PDSCH) transmission (the example shown applies PDCCH based DL control). Fig. 2 illustrates an example block diagram of an approach for processing time switching for PUSCH data transmission (example shown applies PDCCH based DL control).

Alternatively or additionally, instead of TBS, the Latency Reduction Threshold may be defined in terms of Coding rate, or Coding rate × modulation order, or equivalently based on the number of coded PDSCH (or PUSCH) bits (i.e., transport block size) divided by the number of available uncoded PDSCH (or PUSCH) bits. In another embodiment, the Latency Reduction Threshold may be defined in terms of the number of allocated Physical Resource Blocks, i.e., the allocated bandwidth. For example, when the number of allocated PRBs is below a threshold, faster (N+X where X is <4) timing is applied. In yet another embodiment, the Latency Reduction Threshold may be defined in terms of the number of spatial MIMO layers. For example, faster processing is applied only when the number of MIMO layers is less than a predetermined number (e.g., less than 2, i.e., no spatial multiplexing is applied).

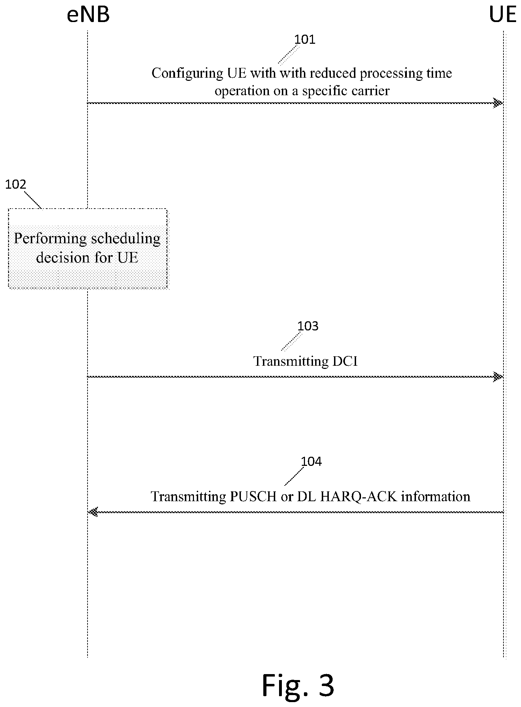

Fig. 3 illustrates an example signaling flow diagram, according to one embodiment of the invention. As illustrated in Fig. 3, at 101, the eNB configures the UE (e.g., a reduced processing time capable UE) with reduced processing time operation on a specific carrier. The configuration may include the configuration of the LRT, which may be DL transmission mode, system BW, subframe type and/or used DL control region (e.g., PDCCH/EPDCCH specific). At 102, the eNB makes a scheduling decision selecting processing time for the UE for PDSCH and/or PUSCH taking into account the restrictions given by the Latency Reduction Threshold (LRT), and prepares the related DL control information (DCI). Thus, the scheduling decision may include, for example, whether reduced processing time or legacy processing time is to be applied. The selecting of a processing time may be based on the LRT in combination with the used DL transmission mode, system BW, subframe type, DL control region, and/or assignment content (number of MIMO layers, TBS size). Then, at 103, the eNB may transmit the DL control information (and in case of PDSCH scheduling, the related PDSCH) to the UE. At 104, the UE may transmit, to the eNB, the PUSCH or DL HARQ-Ack information (on PUCCH or PUSCH) according to the selected processing time (i.e., legacy N+4 assumption or reduced processing time assumption) in the requested subframe given by N+4 or N+2 or N+3, respectively, depending on the Latency Reduction Threshold.

In another embodiment, a UE, such as a reduced processing time capable UE, may receive from the eNB a configuration for reduced processing time operation on a specific carrier. According to one embodiment, the received configuration may include the configuration of the LRT, which may be DL transmission mode, system BW, subframe type and/or used DL control region (e.g., PDCCH/EPDCCH specific). The UE may also receive DCI scheduling PDSCH or PUSCH and may determine, based on a Latency Reduction Threshold whether reduced processing time should be applied or not. In certain embodiments, the UE may then transmit HARQ-ACK or PUSCH according to the timing determined based on the Latency Reduction Threshold.

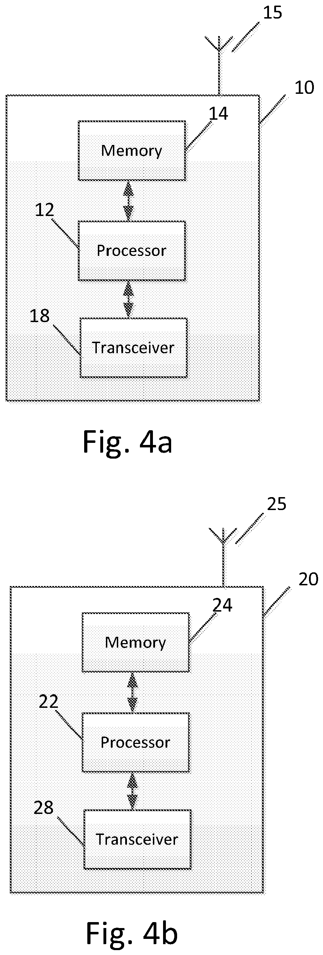

Fig. 4a illustrates an example of an apparatus 10 according to an embodiment. In an embodiment, apparatus 10 may be a node, host, or server in a communications network or serving such a network. For example, apparatus 10 may be a network node or access node for a radio access network, such as a base station, node B or eNB, or an access node of 5G radio access technology. Thus, in certain embodiments, apparatus 10 may include a base station, access node, node B or eNB serving a cell. It should be noted that one of ordinary skill in the art would understand that apparatus 10 may include components or features not shown in Fig. 4a.

As illustrated in Fig. 4a, apparatus 10 may include a processor 22 for processing information and executing instructions or operations. Processor 22 may be any type of general or specific purpose processor. While a single processor 22 is shown in Fig. 4a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Processor 22 may perform functions associated with the operation of apparatus 10 which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 12, enable the apparatus 10 to perform tasks as described herein.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of LTE, WLAN, Bluetooth, BT-LE, NFC, radio frequency identifier (RFID), ultrawideband (UWB), and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink). As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

In one embodiment, apparatus 10 may be a network node or access node, such as a base station, node B or eNB, or an access node of 5G, for example. According to one embodiment, apparatus 10 may be controlled by memory 14 and processor 12 to perform the functions associated with embodiments described herein. For instance, in an embodiment, apparatus 10 may be controlled by memory 14 and processor 12 to configure a UE with reduced processing time operation on a specific carrier. For example, in one embodiment, apparatus 10 may be controlled by memory 14 and processor 12 to transmit a configuration for reduced processing time operation on the specific carrier to the UE. The configuration may include, for instance, the configuration of the LRT, which may be DL transmission mode, system BW, subframe type and/or used DL control region (e.g., PDCCH/EPDCCH specific).

According to certain embodiments, apparatus 10 may be further controlled by memory 14 and processor 12 to perform a scheduling decision selecting processing time for the UE for PDSCH and/or PUSCH taking the LRT into account and to prepare the related DL control information (DCI). In one embodiment, the scheduling decision may include whether reduced processing time or legacy processing time is to be applied. In some embodiments, apparatus 10 may also be controlled by memory 14 and processor 12 to transmit the DL control information (DCI) and, in case of PDSCH scheduling, the related PDSCH to the UE. According to an embodiment, apparatus 10 may also be controlled by memory 14 and processor 12 to receive the PUSCH or DL HARQ-ACK information (on PUCCH or PUSCH) according to the selected processing time (legacy N+4 assumption or reduced processing time assumption) in the requested subframe given by N+4 or N+2 or N+3, respectively, depending on the LRT.

Fig. 4b illustrates an example of an apparatus 20 according to another embodiment. In an embodiment, apparatus 20 may be a node or element in a communications network or associated with such a network, such as a UE, mobile device, stationary device, or other device. A UE may alternatively be referred to as, for example, a mobile station, mobile unit, mobile device, user device, subscriber station, wireless terminal, tablet, smart phone, or the like. Apparatus 20 may be implemented as, for example, a wireless handheld device, a wireless plug-in accessory, or the like. In some example embodiments, apparatus 20 may include one or more processors, one or more computer-readable storage medium (for example, memory, storage, and the like), one or more radio access components (for example, a modem, a transceiver, and the like), and/or a user interface. In some embodiments, apparatus 20 may be a UE configured to operate using one or more radio access technologies, such as LTE, LTE-A, 5G, WLAN, WiFi, Bluetooth, NFC, and any other radio access technologies. Moreover, apparatus 20 may be configured to have established connections to access points using a plurality of the radio access technologies. It should be noted that one of ordinary skill in the art would understand that apparatus 20 may include components or features not shown in Fig. 4b.

As illustrated in Fig. 4b, apparatus 20 may include a processor 22 for processing information and executing instructions or operations. Processor 22 may be any type of general or specific purpose processor. While a single processor 22 is shown in Fig. 4b, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Processor 22 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 24 can be comprised of any combination of random access memory (RAM), read only memory (ROM), static storage such as a magnetic or optical disk, or any other type of non-transitory machine or computer readable media. The instructions stored in memory 24 may include program instructions or computer program code that, when executed by processor 22, enable the apparatus 20 to perform tasks as described herein.

In some embodiments, apparatus 20 may also include or be coupled to one or more antennas 25 for receiving a downlink or signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of LTE, LTE-A, 5G, WLAN, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink. For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Apparatus 20 may further include a user interface.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to one embodiment, apparatus 20 may be a reduced processing time capable UE, for example. In this embodiment, apparatus 20 may be controlled by memory 24 and processor 22 to perform the functions associated with embodiments described herein. In one embodiment, apparatus 20 may be controlled by memory 24 and processor 22 to receive, from an eNB, a configuration for reduced processing time operation on a specific carrier. The configuration may include the configuration of the LRT, such as DL transmission mode, system BW, subframe type and/or used DL control region (e.g., PDCCH/EPDCCH specific). In an embodiment, apparatus 20 may also be controlled by memory 24 and processor 22 to receive DCI scheduling PDSCH or PUSCH and to determine, based on a LRT, whether reduced processing time should be applied or not. Apparatus 20 may then be controlled by memory 24 and processor 22 to transmit HARQ-ACK or PUSCH according to the timing determined based on the LRT.

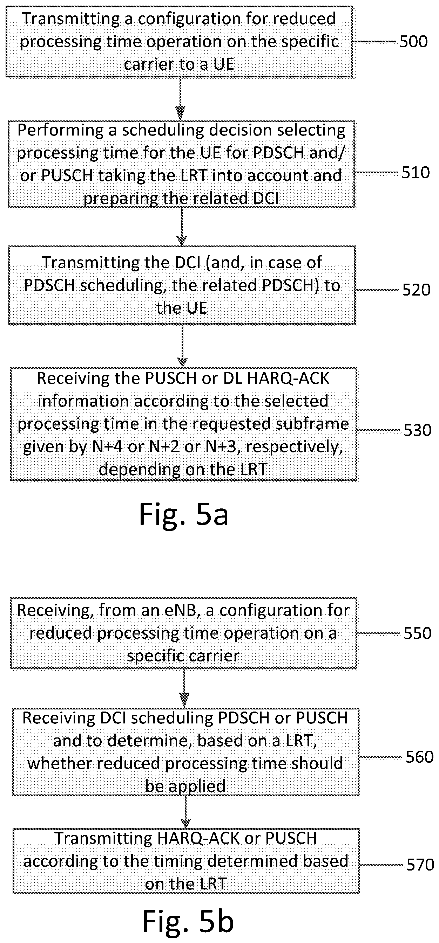

Fig. 5a illustrates an example flow diagram of a method, according to one embodiment. The method may be performed by a base station, eNB, or access node, for example. The method of Fig. 5a may include, at 500, transmitting a configuration for reduced processing time operation on the specific carrier to a UE. The configuration, which applies for that specific carrier, may include, for instance, the configuration of the LRT, which may be DL transmission mode, system BW, subframe type and/or used DL control region (e.g., PDCCH/EPDCCH) specific. According to an embodiment, the method may also include, at 510, performing a scheduling decision selecting processing time for the UE for PDSCH and/or PUSCH taking into account the LRT, and preparing the related DCI. In one embodiment, the scheduling decision may include whether reduced processing time or legacy processing time is to be applied. In addition to the LRT, the scheduling decision of whether to apply reduced processing time may also be based on the used DL transmission mode, system BW, subframe type, DL control region as well as assignment content (number of MIMO layers, TBS size). In some embodiments, the method may further include, at 520, transmitting the DCI and, in case of PDSCH scheduling, the related PDSCH to the UE. According to an embodiment, the method includes, at 530, receiving the PUSCH or DL HARQ-ACK information (on PUCCH or PUSCH) according to the selected processing time (legacy N+4 assumption or reduced processing time assumption) in the requested subframe given by N+4 or N+2 or N+3, respectively, depending on the LRT.

Fig. 5b illustrates an example flow diagram of a method, according to one embodiment. The method may be performed by a UE or mobile station, for example. The method of Fig. 5b may include, at 550, receiving, from an eNB, a configuration for reduced processing time operation on a specific carrier. The configuration may include the configuration of the LRT, such as DL transmission mode, system BW, subframe type, and/or used DL control region (e.g., PDCCH/EPDCCH specific). In an embodiment, the method may also include, at 560, receiving DCI scheduling PDSCH or PUSCH and determining, based at least on a LRT, whether reduced processing time should be applied or not. In addition to the LRT, the determining of whether to apply reduced processing time may also be based on the used DL transmission mode, system BW, subframe type, DL control region as well as assignment content (number of MIMO layers, TBS size). The method may also include, at 570, transmitting HARQ-ACK or PUSCH according to the timing determined based on the LRT.

The embodiments provide several advantages and/or technical improvements. For example, embodiments enable dynamic switching between operation with normal (subframe N+4) and reduced processing times (subframe N+2 or N+3), taking UEs limitations with respect to processing large transport blocks into account. Furthermore, embodiments allow for the reuse of legacy DCI formats (DL Assignments and UL grants). As a consequence, a UE is required to search only for the single DCI format and blind-detection complexity is the same as in legacy, and the LTE feature can be introduced with minimal changes to LTE specification and minimal implementation effort. Accordingly, embodiments can improve performance and throughput of network nodes including, for example, eNBs and UEs. As a result, the use of embodiments result in improved functioning of communications networks and their nodes.

In some embodiments, the functionality of any of the methods, processes, signaling diagrams, or flow charts described herein may be implemented by software and/or computer program code or portions of code stored in memory or other computer readable or tangible media, and executed by a processor. In some embodiments, the apparatus may be, included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and they include program instructions to perform particular tasks. A computer program product may comprise one or more computer-executable components which, when the program is run, are configured to carry out embodiments. The one or more computer-executable components may be at least one software code or portions of it. Modifications and configurations required for implementing functionality of an embodiment may be performed as routine(s), which may be implemented as added or updated software routine(s). Software routine(s) may be downloaded into the apparatus.

Software or a computer program code or portions of it may be in a source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other embodiments, the functionality may be performed by hardware, for example through the use of an application specific integrated circuit (ASIC), a programmable gate array (PGA), a field programmable gate array (FPGA), or any other combination of hardware and software. In yet another embodiment, the functionality may be implemented as a signal, a non-tangible means that can be carried by an electromagnetic signal downloaded from the Internet or other network.

According to an embodiment, an apparatus, such as a node, device, or a corresponding component, may be configured as a computer or a microprocessor, such as single-chip computer element, or as a chipset, including at least a memory for providing storage capacity used for arithmetic operation and an operation processor for executing the arithmetic operation.

One embodiment is directed to a method, which may include transmitting, by an eNB, a configuration for reduced processing time operation on a specific carrier to a UE. The method may also include performing a scheduling decision for the UE for PDSCH and/or PUSCH including the determination, based at least on a LRT, of whether reduced processing time should be applied or not. In addition to the LRT, the scheduling decision of whether to apply reduced processing time may also be based on the used DL transmission mode, system BW, subframe type, DL control region as well as assignment content (number of MIMO layers, TBS size). The method may further include preparing the related DCI and transmitting the DCI. The method may then include receiving PUSCH or DL HARQ-ACK information according to the selected processing time in the requested subframe given by N+4 or N+2 or N+3, respectively.

Another embodiment is directed to an apparatus including at least one processor, and at least one memory including computer program code. The at least one memory and the computer program code are configured, with the at least one processor, to cause the apparatus at least to transmit a configuration for reduced processing time operation on a specific carrier to a UE, to perform a scheduling decision for the UE for PDSCH and/or PUSCH including the determination, at least based on the LRT, of whether reduced processing time should be applied or not, to prepare the related DCI, to transmit the DCI, and to receive PUSCH or DL HARQ-ACK information according to the selected processing time in the requested subframe given by N+4 or N+2 or N+3, respectively.

Another embodiment is directed to an apparatus including transmitting means for transmitting a configuration for reduced processing time operation on a specific carrier to a UE. The apparatus may also include performing means for performing a scheduling decision for the UE for PDSCH and/or PUSCH including the determination, at least based on the LRT, whether reduced processing time should be applied or not. In addition to the LRT, the scheduling decision of whether to apply reduced processing time may also be based on the used DL transmission mode, system BW, subframe type, DL control region as well as assignment content (number of MIMO layers, TBS size). The apparatus may further include preparing means for preparing the related DCI, transmitting means for transmitting the DCI, and receiving means for receiving PUSCH or DL HARQ-ACK information according to the selected processing time in the requested subframe given by N+4 or N+2 or N+3, respectively.

Another embodiment is directed to a method, which may include receiving, at a UE, a configuration for reduced processing time operation on a specific carrier. The configuration may include the configuration of the LRT, such as DL transmission mode, system BW, subframe type and/or used DL control region (e.g., PDCCH/EPDCCH specific). The method may also include receiving DCI scheduling PDSCH or PUSCH and determining, based at least on the LRT, whether reduced processing time should be applied or not. The determining may further include determining whether to apply reduced processing time based on the DL transmission mode, system BW, subframe type and/or used DL control region. The method may also include transmitting HARQ-ACK or PUSCH according to the timing determined based on the LRT.

Another embodiment is directed to an apparatus including at least one processor, and at least one memory including computer program code. The at least one memory and the computer program code are configured, with the at least one processor, to cause the apparatus at least to receive a configuration for reduced processing time operation on a specific carrier. The configuration may include the configuration of the LRT, such as DL transmission mode, system BW, subframe type and/or used DL control region (e.g., PDCCH/EPDCCH specific). The apparatus may also be caused to receive DCI scheduling PDSCH or PUSCH and determine, based at least on a LRT, whether reduced processing time should be applied or not. The determination of whether to apply reduced processing time may be further based on the DL transmission mode, system BW, subframe type and/or used DL control region. The apparatus may be further caused to transmit HARQ-ACK or PUSCH according to the timing determined based on the LRT.

Another embodiment is directed to an apparatus including receiving means for receiving a configuration for reduced processing time operation on a specific carrier. The configuration may include the configuration of the LRT, such as DL transmission mode, system BW, subframe type and/or used DL control region (e.g., PDCCH/EPDCCH specific). The apparatus may also include receiving means for receiving DCI scheduling PDSCH or PUSCH and determining means for determining, based at least on a LRT, whether reduced processing time should be applied or not. The determination of whether to apply reduced processing time may be further based on the DL transmission mode, system BW, subframe type and/or used DL control region. The method may also include transmitting means for transmitting HARQ-ACK or PUSCH according to the timing determined based on the LRT.

One having ordinary skill in the art will readily understand that the examplary embodiments as discussed above may be practiced with steps in a different order, and/or with hardware elements in configurations which are different than those which are disclosed. The aforementioned embodiments are meant to be examples useful for understanding the invention. The present invention is only defined by the appended independent claims, and advantageous embodiments of the present invention are described in the dependent claims.

### List of Abbreviations

- 3GPP: Third Generation Partnership Program
- ACK: Acknowledgement
- AL: Aggregation Level
- C-RNTI: Cell Radio Network Temporal Identifier
- CRS: Common Reference Signal
- CSS: Common Search Space
- DCI: Downlink Control Information
- DL, D: Downlink
- DwPTS: Downlink Pilot Time Slot
- eNB: Enhanced NodeB
- EPDCCH: Enhanced Physical Downlink Control Channel
- FDD: Frequency Division Duplexing
- FDM: Frequency Division Multiplexing
- FS2: Frame Structure 2
- GP: Guard Period
- HARQ: Hybrid Automatic Retransmission request
- LTE: Long Term Evolution
- OFDM: Orthogonal Frequency Division Multiplexing
- PCFICH: Physical Control Format Indicator Channel
- PDCCH: Physical Downlink Control Channel
- PDSCH: Physical Downlink Shared Channel
- PHICH: Physical HARQ-ACK Indicator Channel
- PSS: Primary Synchronization Sequence
- PUCCH: Physical Uplink Control Channel
- PUSCH: Physical Uplink Shared Channel
- RAN: Radio Access Network
- Rel: Release
- S: Special Subframe
- SI: Study Item
- SIB: System Information Block
- SSS: Secondary Synchronization Sequence
- TCP: Transmission Control Protocol
- TDD: Time Division Duplexing
- TDM: Time Division Multiplexing
- TSG: Technical Steering Group
- TTI: Transmission Time Interval
- UCI: Uplink Control Information
- UE: User Equipment
- UL, U: Uplink
- UpPTS: Uplink Pilot Time Slot
- WG: Working Group
- WI: Work Item

## Claims

1. A base station (10) comprising:
means for transmitting (500), a configuration for reduced processing time operation on a specific carrier to a user equipment (20), wherein the configuration for reduced processing time operation includes a configuration of a latency reduction threshold;
means for performing (510) a scheduling decision by selecting a processing time for the user equipment for a physical downlink shared channel and/or a physical uplink shared channel based on the latency reduction threshold, wherein the scheduling decision includes determining whether a reduced processing time or a legacy processing time is to be applied, and wherein the reduced processing time is shorter than the legacy processing time;
means for preparing related downlink control information scheduling the physical downlink shared channel and/or the physical uplink shared channel;
means for transmitting (520) the downlink control information scheduling the physical downlink shared channel and/or the physical uplink shared channel to the user equipment; and
means for receiving (530) physical uplink shared channel or downlink hybrid automatic repeat request information in accordance with the selected processing time.

2. The base station as in claim 1, wherein the configuration of the latency reduction threshold is defined in terms of a transport block size.

3. The base stationas in claim 1 or 2, wherein the configuration of the latency reduction threshold is based on at least one of downlink transmission mode, system bandwidth, subframe type, downlink control region, and downlink physical control channel used.

4. The base station as in claim 3, wherein the downlink physical control channel comprises physical downlink control channel or enhanced physical downlink control channel.

5. A method comprising:
transmitting (500), by a base station (10), a configuration for reduced processing time operation on a specific carrier to a user equipment (20), wherein the configuration for reduced processing time operation includes a configuration of a latency reduction threshold;
performing (510), by the base station, a scheduling decision by selecting a processing time for the user equipment for a physical downlink shared channel and/or a physical uplink shared channel based on the latency reduction threshold, wherein the scheduling decision includes determining whether a reduced processing time or a legacy processing time is to be applied, and wherein the reduced processing time is shorter than the legacy processing time;
preparing, by the base station, related downlink control information scheduling the physical downlink shared channel and/or the physical uplink shared channel;
transmitting (520), by the base station, the downlink control information scheduling the physical downlink shared channel and/or the physical uplink shared channel to the user equipment; and
receiving (530), by the base station, physical uplink shared channel or downlink hybrid automatic repeat request information in accordance with the selected processing time.

6. The method as in claim 5, wherein the configuration of the latency reduction threshold is based on at least one of downlink transmission mode, system bandwidth, subframe type, downlink control region, and downlink physical control channel used.

7. The method as in claim 6, wherein the downlink physical control channel comprises physical downlink control channel or enhanced physical downlink control channel.

8. A user equipment (20) comprising:
means for receiving (550), from a base station (10), a configuration for reduced processing time operation on a specific carrier, wherein the configuration for reduced processing time operation includes a configuration of a latency reduction threshold;
means for receiving (560), from the base station, downlink control information scheduling a physical downlink shared channel and/or a physical uplink shared channel;
means for determining (560), based on the latency reduction threshold, whether a reduced processing time or a legacy processing time is to be applied, and wherein the reduced processing time is shorter than the legacy processing time; and
means for transmitting (570) physical uplink shared channel or downlink hybrid automatic repeat request information according to the processing time determined based on the latency reduction threshold.

9. The user equipment as in claim 8, wherein the configuration of the latency reduction threshold is defined in terms of a transport block size.

10. The user equipment as in claim 8 or 9, wherein the configuration of the latency reduction threshold is based on at least one of downlink transmission mode, system bandwidth, subframe type, downlink control region, and downlink physical control channel used.

11. The user equipment as in claim 10, wherein the downlink physical control channel comprises physical downlink control channel or enhanced physical downlink control channel.

12. The user equipment as in any one of claims 8-11, wherein the reduced processing timing is one of 2 and 3 subframes from the reception of the downlink control information.

13. A method comprising:
receiving (550), by a user equipment (20) from a base station (10), a configuration for reduced processing time operation on a specific carrier, wherein the configuration for reduced processing time operation includes a configuration of a latency reduction threshold;
receiving (560), by the user equipment from the base station, downlink control information scheduling a physical downlink shared channel and/or a physical uplink shared channel;
determining (560), by the user equipment, based on the latency reduction threshold, whether a reduced processing time or a legacy processing time is to be applied, and wherein the reduced processing time is shorter than the legacy processing time; and
transmitting (570), by the user equipment, physical uplink shared channel or downlink hybrid automatic repeat request information according to the processing time determined based on the latency reduction threshold.

14. A computer program comprising instructions which, when the program is executed by a computer, cause the computer to carry out the method according to any of claims 5 to 7 or 13.

## Patentansprüche

1. Basisstation (10), umfassend:
Mittel zum Senden (500) einer Konfiguration für Betrieb mit reduzierter Verarbeitungszeit auf einem spezifischen Träger zu einem Benutzergerät (20),
wobei die Konfiguration für Betrieb mit reduzierter Verarbeitungszeit eine Konfiguration einer Latenzreduktionsschwelle umfasst;
Mittel zum Durchführen (510) einer Scheduling-Entscheidung durch Auswählen einer Verarbeitungszeit für das Benutzergerät für einen Physical Downlink Shared Channel und/oder einen Physical Uplink Shared Channel auf der Basis der Latenzreduktionsschwelle, wobei die Scheduling-Entscheidung umfasst zu bestimmen, ob eine reduzierte Verarbeitungszeit oder eine veraltete Verarbeitungszeit anzuwenden ist, und wobei die reduzierte Verarbeitungszeit kürzer als die veraltete Verarbeitungszeit ist;
Mittel zum Erstellen von diesbezüglichen Downlink-Steuerinformationen zum Scheduling des Physical Downlink Shared Channel und/oder des Physical Uplink Shared Channel;
Mittel zum Senden (520) der Downlink-Steuerinformationen zum Scheduling des Physical Downlink Shared Channel und/oder des Physical Uplink Shared Channel zu dem Benutzergerät; und
Mittel zum Empfangen (530) von Informationen des Physical Uplink Shared Channel oder der Downlink Hybrid Automatic Repeat Request gemäß der ausgewählten Verarbeitungszeit.

2. Basisstation nach Anspruch 1, wobei die Konfiguration der Latentzreduktionsschwelle über eine Transportblockgröße definiert wird.

3. Basisstation nach Anspruch 1 oder 2, wobei die Konfiguration der Latenzreduktionsschwelle auf mindestens einem von Downlink-Übertragungsmodus, Systembandbreite, Subrahmentyp, Downlink-Steuerregion und verwendetem Downlink Physical Control Channel basiert.

4. Basisstation nach Anspruch 3, wobei der Downlink Physical Control Channel einen Physical Downlink Control Channel oder einen Enhanced Physical Downlink Control Channel umfasst.

5. Verfahren, umfassend:
Senden (500) einer Konfiguration für Betrieb mit reduzierter Verarbeitungszeit auf einem spezifischen Träger durch eine Basisstation (10) zu einem Benutzergerät (20), wobei die Konfiguration für Betrieb mit reduzierter Verarbeitungszeit eine Konfiguration einer Latenzreduktionsschwelle umfasst;
Durchführen (510) einer Scheduling-Entscheidung durch Auswählen einer Verarbeitungszeit für das Benutzergerät für einen Physical Downlink Shared Channel und/oder einen Physical Uplink Shared Channel auf der Basis der Latenzreduktionsschwelle durch die Basisstation, wobei die Scheduling-Entscheidung umfasst zu bestimmen, ob eine reduzierte Verarbeitungszeit oder eine veraltete Verarbeitungszeit anzuwenden ist, und wobei die reduzierte Verarbeitungszeit kürzer als die veraltete Verarbeitungszeit ist;
Erstellen von diesbezüglichen Downlink-Steuerinformationen zum Scheduling des Physical Downlink Shared Channel und/oder des Physical Uplink Shared Channel, durch die Basisstation;
Senden (520) der Downlink-Steuerinformationen zum Scheduling des Physical Downlink Shared Channel und/oder des Physical Uplink Shared Channel zu dem Benutzergerät, durch die Basisstation; und
Empfangen (530) von Informationen des Physical Uplink Shared Channel oder der Downlink Hybrid Automatic Repeat Request gemäß der ausgewählten Verarbeitungszeit, durch die Basisstation.

6. Verfahren nach Anspruch 5, wobei die Konfiguration der Latenzreduktionsschwelle auf mindestens einem von Downlink-Übertragungsmodus, Systembandbreite, Subrahmentyp, Downlink-Steuerregion und verwendetem Downlink Physical Control Channel basiert.

7. Verfahren nach Anspruch 6, wobei der Downlink Physical Control Channel einen Physical Downlink Control Channel oder einen Enhanced Physical Downlink Control Channel umfasst.

8. Benutzergerät (20), umfassend:
Mittel zum Empfangen (550) einer Konfiguration für Betrieb mit reduzierter Verarbeitungszeit von einer Basisstation (10) auf einem spezifischen Träger, wobei die Konfiguration für Betrieb mit reduzierter Verarbeitungszeit eine Konfiguration einer Latenzreduktionsschwelle umfasst;
Mittel zum Empfangen (560) von Downlink-Steuerinformationen zum Scheduling eines Physical Downlink Shared Channel und/oder eines Physical Uplink Shared Channel von der Basisstation;
Mittel zum Bestimmen (560) auf der Basis der Latenzreduktionsschwelle, ob eine reduzierte Verarbeitungszeit oder eine veraltete Verarbeitungszeit anzuwenden ist, und wobei die reduzierte Verarbeitungszeit kürzer als die veraltete Verarbeitungszeit ist; und
Mittel zum Senden (570) von Informationen des Physical Uplink Shared Channel oder der Downlink Hybrid Automatic Repeat Request gemäß der auf der Basis der Latenzreduktionsschwelle bestimmten Verarbeitungszeit.

9. Benutzergerät nach Anspruch 8, wobei die Konfiguration der Latenzreduktionsschwelle über eine Transportblockgröße definiert wird.

10. Benutzergerät nach Anspruch 8 oder 9, wobei die Konfiguration der Latenzreduktionsschwelle auf mindestens einem von Downlink-Übertragungsmodus, Systembandbreite, Subrahmentyp, Downlink-Steuerregion und verwendetem Downlink Physical Control Channel basiert.

11. Benutzergerät nach Anspruch 10, wobei der Downlink Physical Control Channel einen Physical Downlink Control Channel oder einen Enhanced Physical Downlink Control Channel umfasst.

12. Benutzergerät nach einem der Ansprüche 8-11, wobei das reduzierte Verarbeitungstiming zwei oder drei Subrahmen vom Empfang der Downlink-Steuerinformationen ist.

13. Verfahren, umfassend:
Empfangen (550) einer Konfiguration für Betrieb mit reduzierter Verarbeitungszeit auf einem spezifischen Träger durch ein Benutzergerät (20) von einer Basisstation (10), wobei die Konfiguration für Betrieb mit reduzierter Verarbeitungszeit eine Konfiguration einer Latenzreduktionsschwelle umfasst;
Empfangen (560) von Downlink-Steuerinformationen zum Scheduling eines Physical Downlink Shared Channel und/oder eines Physical Uplink Shared Channel, durch das Benutzergerät von der Basisstation;
Bestimmen (560) durch das Benutzergerät auf der Basis der Latenzreduktionsschwelle, ob eine reduzierte Verarbeitungszeit oder eine veraltete Verarbeitungszeit anzuwenden ist, und wobei die reduzierte Verarbeitungszeit kürzer als die veraltete Verarbeitungszeit ist; und
Senden (570) von Informationen des Physical Uplink Shared Channel oder der Downlink Hybrid Automatic Repeat Request gemäß der auf der Basis der Latenzreduktionsschwelle bestimmten Verarbeitungszeit durch das Benutzergerät.

14. Computerprogramm, das Anweisungen umfasst, die, wenn das Programm durch einen Computer ausgeführt wird, bewirken, dass der Computer das Verfahren nach einem der Ansprüche 5 bis 7 oder 13 ausführt.

## Revendications

1. Station de base (10), comprenant :
des moyens pour transmettre (500) une configuration pour un fonctionnement à temps de traitement réduit sur une porteuse spécifique à un équipement d'utilisateur (20), dans laquelle la configuration pour un fonctionnement à temps de traitement réduit comprend une configuration d'un seuil de réduction de latence ;
des moyens pour exécuter (510) une décision de programmation en sélectionnant un temps de traitement pour l'équipement d'utilisateur pour un canal partagé de liaison descendante physique et/ou un canal partagé de liaison montante physique sur la base du seuil de réduction de latence, dans laquelle la décision de programmation comprend l'étape consistant à déterminer si un temps de traitement réduit ou un temps de traitement d'héritage doit être appliqué, et dans laquelle le temps de traitement réduit est plus court que le temps de traitement d'héritage ;
des moyens pour préparer une programmation d'informations de commande de liaison descendante associée du canal partagé de liaison descendante physique et/ou du canal partagé de liaison montante physique ;
des moyens pour transmettre (520) la programmation d'informations de commande de liaison descendante du canal partagé de liaison descendante physique et/ou du canal partagé de liaison montante physique à l'équipement d'utilisateur ; et
des moyens pour recevoir (530) des informations de canal partagé de liaison montante physique ou de demande de répétition automatique hybride de liaison descendante suivant le temps de traitement sélectionné.

2. Station de base selon la revendication 1, dans laquelle la configuration du seuil de réduction de latence est définie en termes d'une taille de bloc de transport.

3. Station de base selon la revendication 1 ou 2, dans laquelle la configuration de seuil de réduction de latence est basée sur au moins un élément parmi un mode de transmission de liaison descendante, une largeur de bande de système, un type de sous-trame, une région de commande de liaison descendante et un canal de commande physique de liaison descendante utilisé.

4. Station de base selon la revendication 3, dans laquelle le canal de commande physique de liaison descendante comprend un canal de commande de liaison descendante physique ou un canal de commande de liaison descendante physique amélioré.

5. Procédé, comprenant les étapes suivantes :
transmettre (500), par une station de base (10), une configuration pour un fonctionnement à temps de traitement réduit sur une porteuse spécifique à un équipement d'utilisateur (20), dans lequel la configuration pour un fonctionnement à temps de traitement réduit comprend une configuration d'un seuil de réduction de latence ;
exécuter (510), par la station de base, une décision de programmation en sélectionnant un temps de traitement pour l'équipement d'utilisateur pour un canal partagé de liaison descendante physique et/ou un canal partagé de liaison montante physique sur la base du seuil de réduction de latence, dans lequel la décision de programmation comprend l'étape consistant à déterminer si un temps de traitement réduit ou un temps de traitement d'héritage doit être appliqué, et dans lequel le temps de traitement réduit est plus court que le temps de traitement d'héritage ;
préparer, par la station de base, une programmation d'informations de commande de liaison descendante associée du canal partagé de liaison descendante physique et/ou du canal partagé de liaison montante physique ;
transmettre (520), par la station de base, la programmation d'informations de commande de liaison descendante du canal partagé de liaison descendante physique et/ou du canal partagé de liaison montante physique à l'équipement d'utilisateur ; et
recevoir (530), par la station de base, des informations de canal partagé de liaison montante physique ou de demande de répétition automatique hybride de liaison descendante suivant le temps de traitement sélectionné.

6. Procédé selon la revendication 5, dans lequel la configuration du seuil de réduction de latence est basée sur au moins un élément parmi un mode de transmission de liaison descendante, une largeur de bande de système, un type de sous-trame, une région de commande de liaison descendante et un canal de commande physique de liaison descendante utilisé.

7. Procédé selon la revendication 6, dans lequel le canal de commande physique de liaison descendante comprend un canal de commande de liaison descendante physique ou un canal de commande de liaison descendante physique amélioré.

8. Equipement d'utilisateur (20), comprenant :
des moyens pour recevoir (550), en provenance d'une station de base (10), une configuration pour un fonctionnement à temps de traitement réduit sur une porteuse spécifique, dans lequel la configuration pour un fonctionnement à temps de traitement réduit comprend une configuration d'un seuil de réduction de latence ;
des moyens pour recevoir (560), en provenance de la station de base, une programmation d'informations de commande de liaison descendante d'un canal partagé de liaison descendante physique et/ou d'un canal partagé de liaison montante physique,
des moyens pour déterminer (560), sur la base du seuil de réduction de latence, si un temps de traitement réduit ou un temps de traitement d'héritage doit être appliqué, et dans lequel le temps de traitement réduit est plus court que le temps de traitement d'héritage ; et
des moyens pour transmettre (570) des informations de canal partagé de liaison montante physique ou de demande de répétition automatique hybride de liaison descendante suivant le temps de traitement déterminé sur la base du seuil de réduction de latence.

9. Equipement d'utilisateur selon la revendication 8, dans lequel la configuration du seuil de réduction de latence est définie en termes d'une taille de bloc de transport.

10. Equipement d'utilisateur selon la revendication 8 ou 9, dans lequel la configuration du seuil de réduction de latence est basée sur au moins un élément parmi un mode de transmission de liaison descendante, une largeur de bande de système, un type de sous-trame, une région de commande de liaison descendante et un canal de commande physique de liaison descendante utilisé.

11. Equipement d'utilisateur selon la revendication 10, dans lequel le canal de commande physique de liaison descendante comprend un canal de commande de liaison descendante physique ou un canal de commande de liaison descendante physique amélioré.

12. Equipement d'utilisateur selon l'une quelconque des revendication 8 à 11, dans lequel le temps de traitement réduit est une parmi 2 ou 3 sous-trames provenant de la réception des informations de commande de liaison descendante.

13. Procédé, comprenant les étapes suivantes :
recevoir (550), par un équipement d'utilisateur (20) en provenance d'une station de base (10), une configuration pour un fonctionnement à temps de traitement réduit sur une porteuse spécifique, dans lequel la configuration pour un fonctionnement à temps de traitement réduit comprend une configuration d'un seuil de réduction de latence ;
recevoir (560), par un équipement d'utilisateur en provenance d'une station de base, une programmation d'informations de commande de liaison descendante d'un canal partagé de liaison descendante physique et/ou d'un canal partagé de liaison montante physique,
déterminer (560), par l'équipement d'utilisateur, sur la base du seuil de réduction de latence, si un temps de traitement réduit ou un temps de traitement d'héritage doit être appliqué, et dans lequel le temps de traitement réduit est plus court que le temps de traitement d'héritage ; et
transmettre (570), par l'équipement d'utilisateur, des informations de canal partagé de liaison montante physique ou de demande de répétition automatique hybride de liaison descendante suivant le temps de traitement déterminé sur la base du seuil de réduction de latence.

14. Programme d'ordinateur contenant des instructions qui, lorsque la programmation est exécuté par un ordinateur, amènent l'ordinateur à exécuter le procédé selon l'une quelconque des revendications 5 à 7 ou 13.
